# EUROPÄISCHE PATENTSCHRIFT

(11) **EP 2 781 472 B1**
(45) Veröffentlichungstag und Bekanntmachung des Hinweises auf die Patenterteilung: **07.09.2016**
(21) Anmeldenummer: 14159186.7
(22) Anmeldetag: 12.03.2014
(51) Int. Cl.: B65G 17/00, B25B 27/22, F16G 3/00

(54) **Vorrichtung zum Warten eines Bandförderers**
Device for maintaining a belt conveyor
Dispositif de maintenance d'un convoyeur à bande

(30) Priorität: 21.03.2013 AT 501932013
(43) Veröffentlichungstag der Anmeldung: 24.09.2014
(73) Patentinhaber: Heigl, Mario, 3341 Ybbsitz (AT)
(72) Erfinder: Heigl, Mario, 3341 Ybbsitz (AT)
(74) Vertreter: Patentanwaltskanzlei Hübscher

(56) Entgegenhaltungen:
- CN-U- 201 713 062
- DE-A1- 10 155 730
- US-A- 1 710 092
- US-A- 3 648 973
- US-A- 4 367 862
- US-A- 5 752 377
- US-A1- 2009 183 489

## Beschreibung

Die Erfindung bezieht sich auf einen Bandförderer und eine Vorrichtung zu seiner Wartung mit einem über Umlenkrollen geführten Förderband, dessen aus Kunststoff gefertigte Bandglieder Ausnehmungen für den Eingriff der Mitnehmerzähne der Umlenkrollen aufweisen.

Bei Bandförderern mit Förderbändern aus gelenkig miteinander verbundenen Bandgliedern sind zum Warten beispielsweise einzelne Bandglieder auszuwechseln. Bei einem durchgehenden Band kann es notwendig werden, die miteinander verbundenen Bandenden zu lösen. In beiden Fällen ist es notwendig, die Fügestellen der Bandglieder zu entlasten. Die für den Betrieb eines Förderbandes erforderliche Förderbandspannung wird üblicherweise mit Hilfe eines Spanntriebes aufgebaut. Zu diesem Zweck ist es bekannt (DE 10343569 A1), zumindest eine der endseitigen Umlenkrollen für das Förderband gegenüber dem Traggestell des Bandförderers in Bandlängsrichturig zu verlagern. Ein solcher Spanntrieb kann auch dazu benützt werden, das Förderband zu entlasten und die Zugspannungen abzubauen, sodass ein Lösen der Verbindungsstellen zwischen einzelnen Bandgliedern oder den Bandenden möglich wird. Nachteilig ist allerdings, dass im Bereich der spannbaren Umlenkrolle nicht nur Platz für den Spanntrieb geschaffen werden muss, sondern auch für einen ausreichenden Spannweg zu sorgen ist, der sich beim Lösen der Bandspannung über die Umfangslänge des Förderbandes verteilt und nicht vollständig im Bereich der zu lösenden Verbindungsstelle verfügbar ist. Außerdem ist das Betätigen des Spanntriebes im Allgemeinen mit Hilfe eines Handwerkzeuges aufgrund der gedrängten Platzverhältnisse mühsam.

Zum Schließen und Öffnen einer mit dem Fördertrum durch einen Tunneltrockner laufenden Fördereinrichtung aus seitlichen, endlos über Kettenräder geführten Laschenketten und zwischen den Laschenketteen vorgesehenen Roststäben ist es außerdem bekannt (CN 201713062 U), gemäß dem Oberbegriff des Anspruchs 1 die auf Längsträgern geführten Fördertrume der seitlichen Laschenketten mit Hilfe je einer Klemmeinrichtung verschiebefest auf den Längsträgern festzulegen, indem die Klemmeinrichtung mit Hilfe eines mit Fingern in aufeinanderfolgende Kettenglieder eingreifenden Klemmhalters und eines Gegenhalters auf der gegenüberliegenden Seite des Längsträgers angeklemmt wird. Ein mit dem Klemmhalter durch einen Schraubentrieb in Längsrichtung der Laschenkette verlagerbarer Spannkopf greift mit Mitnehmerfingern ebenfalls in aufeinanderfolgende Kettenglieder ein, sodass bei einer Betätigung des Schraubentriebes die vom Spannkopf erfassten Kettenglieder unter einer Entlastung der zwischen dem Klemmhalter und dem Spannkopf befindlichen Kettenglieder gegen den Klemmhalter mit der Wirkung gezogen werden, dass die entlasteten Kettenglieder voneinander gelöst werden können. Wegen der notwendigen Festlegung des Klemmhalters auf dem das Fördertrum der Laschenkette führenden Längsträger ist diese bekannte Konstruktion für den Einsatz bei Gliederbändern aus Kunststoff ungeeignet, insbesondere bei Gliederbändern mit einem vergleichsweise geringen Abstand zwischen den Bandtrumen. Außerdem ist die Handhabung durch die Notwendigkeit aufwendig, die beiden seitlichen Laschenketten jeweils für sich auf dem zugehörigen Längsträger festlegen und dann spannen zu müssen.

Der Erfindung liegt somit die Aufgabe zugrunde, eine Vorrichtung zum Warten eines Bandförderers der eingangs geschilderten Art derart auszugestalten, dass ein einfaches Entspannen der Verbindungsstellen im Wartungsbereich des Förderbandes ermöglicht wird.

Die Erfindung löst die gestellte Aufgabe durch den Band förden und die Vorrichtung nach Anspruch 1, wobei die Vorrichtung zur Wartung des Bandförderers zwei mit einem Spanntrieb versehene, in einem gegenseitigen Abstand in Bandlängsrichtung angeordnete Spannköpfe umfasst, die durch in die Ausnehmungen der Bandglieder eingreifende Mitnehmer zugfest mit dem Förderband verbindbar und zusammen mit ihrem Spanntrieb in einem zwischen die Trume des Förderbandes einführbaren Gestell angeordnet sind.

Da die Wartungsvorrichtung eine Baueinheit bildet, die die Spannköpfe mit ihrem Spanntrieb in einem Gestell zusammenfasst, kann die Vorrichtung unabhängig von der Konstruktion des Bandförderers zwischen die Trume des Förderbandes eingeführt und im Bereich des zu wartenden Bandabschnittes platziert werden, sodass lediglich die Spannköpfe mit dem Förderband zugfest zu verbinden sind, bevor der Spanntrieb betätigt wird, ohne dass die Notwendigkeit besteht, die Vorrichtung gegenüber dem Gestell des Bandförderer festlegen zu müssen. Die Spannköpfe greifen ja mit ihren Mitnehmern in mit Abstand voneinander angeordnete Bandglieder ein, und zwar in Ausnehmungen, die für den Eingriff der Mitnehmerzähne der Umlenkrollen vorgesehen sind. In diesem Fall werden für die zugfeste Verbindung zwischen den Spannköpfen und dem Förderband keine zusätzlichen Konstruktionsmaßnahmen erforderlich. Damit die Spannköpfe an unterschiedliche Ausführungen der Bandglieder angepasst werden können, können die Mitnehmer austauschbar, beispielsweise in Form von auswechselbaren Leisten, auf den Spannköpfen gelagert sein.

Über den Spanntrieb wird der sich zwischen den durch die Spannköpfe erfassten Bandgliedern ergebende Wartungsbereich entspannt, das Förderband außerhalb des Wartungsbereiches jedoch einer zusätzlichen Spannung unterworfen. Dies bedeutet, dass sich im Wartungsbereich vorteilhafte Wartungsbedingungen ergeben, und zwar unabhängig von vorhandenen Spanntrieben für das Förderband. Aufgrund der zusätzlich aufgebrachten Spannung auf das Förderband wird nach Abschluss der Wartungsarbeiten und dem Lösen des Spanntriebes für die Spannköpfe der gewartete Bandbereich gespannt, während das Förderband entlang der übrigen Länge entlastet wird und die vor den Wartungsarbeiten aufgebrachte Bandspannung einnimmt. Aufgrund dieses Umstandes ist es häufig nicht mehr erforderlich, die Bandspannung nach den Wartungsarbeiten neuerlich einzustellen. Dies gilt nicht nur für Wartungsarbeiten, sondern auch für das Aufziehen eines Förderbandes mit Hilfe der erfindungsgemäßen Spannköpfe, sodass die erfindungsgemäße Vorrichtung nicht nur für die Wartung, sondern auch für die Montage eines Bandförderers eingesetzt werden kann. In diesem Fall können die im Bandförderer selbst vorgesehenen Spanntriebe für das Förderband entfallen, weil eine geeignete Bandspannung anhand der Länge des Förderbandes gewählt werden kann.

Damit die gegen das Förderband vorragenden Mitnehmer das Einführen der Spannköpfe zwischen die Förderbandtrume nicht behindern, können die gegen die Ausnehmungen von Bandgliedern des Förderbandes vorragenden Mitnehmer in die Spannköpfe versenkbar gelagert sein. Auf diese Weise kann die Vorrichtung mit eingezogenen Mitnehmern zwischen den Förderbandtrumen platziert werden, bevor die Mitnehmer zum Eingriff in die Ausnehmungen der Bandglieder ausgefahren werden. Darüber hinaus erleichtert ein Einziehen der Mitnehmer in die Spannköpfe ein Lösen und Entfernen der erfindungsgemäßen Vorrichtung nach deren Benutzung.

Um beim Spannen der Spannköpfe mit Hilfe des Spanntriebes ein Lösen der zugfesten Verbindung zwischen den Spannköpfen und dem Förderband durch ein Abheben der Bandglieder von den Spannköpfen zu verhindern, können die Mitnehmer aus einem Reibwerkstoff bestehen oder einen Reibbelag aufweisen, sodass die dadurch bedingten erhöhten Reibungskräfte ein Ausziehen der Mitnehmer aus den Ausnehmungen der Bandglieder erschweren. Außerdem können die Mitnehmer in Mitnahmerichtung eine Rastprofilierung aufweisen, die beispielsweise in Form einer vorragenden Rastnase ausgebildet ist und bei einer Kraftübertragung von den Mitnehmern auf die Bandglieder diese im Mitnahmebereich verformen, sodass sich ein Formschluss zwischen den Bandgliedern und den Mitnehmern ergibt.

Ein Abheben des Förderbandes von den Spannköpfen kann auch durch Niederhalter verhindert werden, die das Förderband in Anlage an die eine Auflage für das Förderband bildenden Spannköpfe halten, was allerdings zusätzliche Konstruktionsmaßnahmen für die Niederhalter bedeutet.

Der Spanntrieb zwischen den Spannköpfen kann unterschiedlich ausgeführt werden. Besonders einfache Konstruktionsverhältnisse ergeben sich, wenn der Spanntrieb einen Seilzug umfasst, mit dessen Hilfe einer der beiden Spannköpfe gegen die Kraft einer Rückstellfeder im Spannsinn beaufschlagt werden kann.

Ist der Spanntrieb mit einem Geber für die Spannkraft versehen, so kann die Zugspannung des Förderbandes außerhalb des Wartungsbereiches festgestellt und davon abhängig auf die Zugspannung des Förderbandes nach dem Lösen des Spanntriebes geschlossen werden.

In der Zeichnung ist der Erfindungsgegenstand beispielsweise dargestellt. Es zeigen
- Fig. 1: eine erfindungsgemäße Vorrichtung zum Warten eines Bandförderers in einer schematischen Draufsicht,
- Fig. 2: diese Vorrichtung in einer Seitenansicht bei entspanntem Spanntrieb an einem größeren Maßstab und
- Fig. 3: eine der Fig. 2 entsprechende Seitenansicht der Vorrichtung mit betätigtem Spanntrieb.

Die erfindungsgemäße Vorrichtung zum Warten eines Bandförderers weist ein rahmenförmiges Gestell 1 mit einem auf dem Gestell 1 verschiebefest angeordneten Spannkopf 2 und einem Spannkopf 3 auf, der entlang einer Führung 4 des Gestelles 1 verschiebbar gelagert ist. An diesem verschiebbaren Spannkopf 3 greift ein Spanntrieb 5 über einen Seilzug 6 an, mit dessen Hilfe der Spannkopf 3 gegen die Kraft von Rückstellfedern 7 unter einer Verlagerung gegen den feststehenden Spannkopf 2 hin gespannt werden kann.

Zur zugfesten Verbindung der Spannköpfe 2, 3 mit einem strichpunktiert angedeuteten Förderband 8, das aus einzelnen miteinander gelenkig verbundenen Bandgliedern 9 aus Kunststoff zusammengesetzt ist, sind die Spannköpfe 2, 3 mit Mitnehmern 10 versehen, die mit in den Bandgliedern 9 vorhandenen Ausnehmungen 11 zusammenwirken. Diese Ausnehmungen 11 dienen zur Mitnahme des Förderbandes 8 durch endseitige Umlenkrollen, die mit entsprechenden Zähnen in diese Ausnehmungen 11 eingreifen.

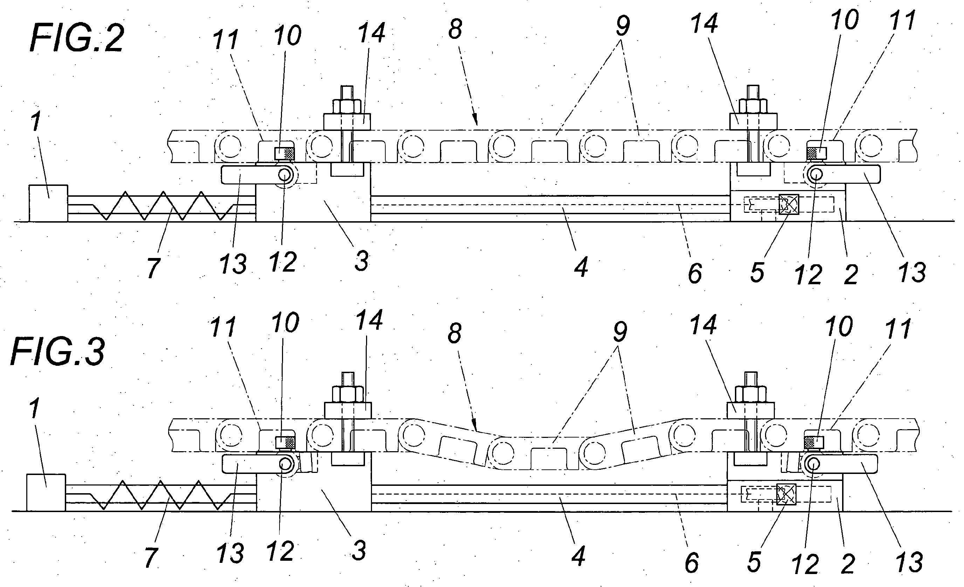

Die Mitnehmer 10 sind auf je einer in den Spannköpfen 2, 3 drehbar gelagerten Welle 12 angeordnet und können durch eine Drehung der Welle 12 um 90° entgegen der Spannrichtung, beispielsweise mit Hilfe eines an die Welle 12 angesetzten Hebels 13, aus einer in den Spannköpfen 2, 3 versenkten Ruhestellung in eine über die Spannköpfe 2, 3 vorstehende, anschlagbegrenzte Mitnahmestellung verschwenkt werden. In der Mitnahmestellung greifen die Mitnehmer 10 in die Ausnehmungen 11 der Bandglieder 9 ein, wie dies in der Fig. 2 dargestellt ist. Das Versenken der Mitnehmer 10 in die Spannköpfe 2, 3 kann aber auch durch andere Maßnahmen sichergestellt werden, beispielsweise durch eine Kulissenführung:

Um während der Spannbewegung ein Abheben der durch die Mitnehmer 10 erfassten Bandglieder 9 von den Spannköpfen 2, 3 zu verhindern, können für das Förderband 8 Niederhalter 14, beispielsweise in Form von Klemmleisten vorgesehen sein, mit deren Hilfe das Förderband 8 im Bereich der Spannköpfe 2, 3 an diese angedrückt gehalten wird.

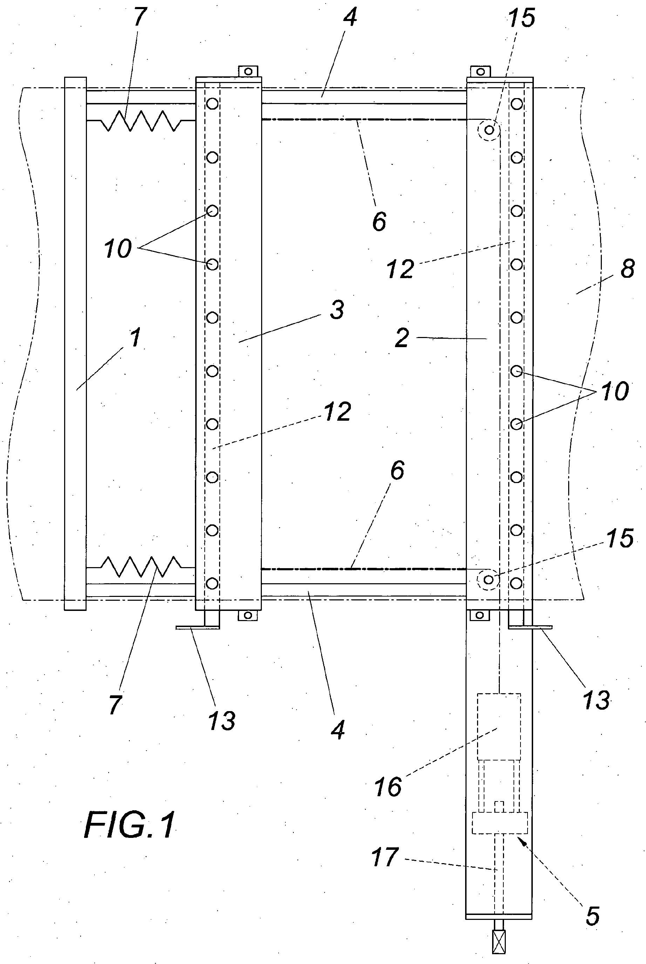

Wie der Fig. 1 entnommen werden kann, ist der über Umlenkrollen 15 geführte Seilzug 6 über einen Geber 16 für die Spannkraft am Spanntrieb 5 abgeschlossen, der gemäß dem Ausführungsbeispiel mit einer Gewindespindel 17 versehen ist. Wird die Gewindespindel 17 betätigt, so wird der Spannkopf 3 gegen den Spannkopf 2 hin verlagert und das Förderband im Wartungsbereich zwischen den beiden Spannköpfen 2, 3 zusammengezogen, was gemäß der Fig. 3 ein entlastetes Durchhängen des Wartungsbereiches zur Folge hat, während der über die endseitigen Umlenkrollen geführte Abschnitt des Förderbandes außerhalb des Wartungsbereiches unter einer erhöhten Zugspannung gehalten wird. Die im Wartungsbereich entlasteten Bandglieder 9 können somit gewechselt werden, indem die Gelenkachsen gelöst werden. Nach dem Ersatz einzelner Bandglieder 9 kann der Wartungsbereich wieder durch ein Auseinanderfahren der Spannköpfe 2, 3 gespannt werden, wobei die Überspannung außerhalb des Wartungsbereiches abgebaut wird und das Förderband eine dem Ausgangszustand entsprechende Zugspannung einnimmt. Über den Geber 16 für die Zugspannung kann die Zugspannung im Förderband 8 überprüft werden.

## Patentansprüche

1. Bandförderer und Vorrichtung zu seiner Wartung mit einem über Umlenkrollen geführten Förderband (8), dessen aus Kunststoff gefertigte Bandglieder (9) Ausnehmungen (11) für den Eingriff der Mitnehmerzähne der Umlenkrollen aufweisen, wobei die Vorrichtung zur Wartung des Bandförderers zwei mit einem Spanntrieb (5) versehene, in einem gegenseitigen Abstand in Bandlängsrichtung angeordnete Spannköpfe (2, 3) umfasst, die durch in die Ausnehmungen (11) der Bandglieder (9) eingreifende Mitnehmer (10) zugfest mit dem Förderband (8) verbindbar und zusammen mit ihrem Spanntrieb (5) in einem zwischen die Trume des Förderbandes (8) einführbaren Gestell (1) angeordnet sind.

2. Bandförderer und Vorrichtung nach Anspruch 1, **dadurch gekennzeichnet, dass** die Mitnehmer (1-0) in Form von auswechselbaren Leisten auf den Spannköpfen austauschbar gelagert sind.

3. Bandförderer und Vorrichtung nach Anspruch 1 oder 2, **dadurch gekennzeichnet, dass** die gegen die Ausnehmungen (11) vorragenden Mitnehmer (10) in die Spannköpfe (2, 3) versenkbar gelagert sind:

4. Bandförderer und Vorrichtung nach einem der Ansprüche 1 bis 3, **dadurch gekennzeichnet, dass** die Mitnehmer (10) aus einem Reibwerkstoff bestehen oder einen Reibbelag aufweisen.

5. Bandförderer und Vorrichtung nach einem der Ansprüche 1 bis 4, **dadurch gekennzeichnet, dass** die Mitnehmer (10) in Mitnahmerichtung eine Rastprofilierung aufweisen.

6. Bandförderer und Vorrichtung einem der Ansprüche 1 bis 5, **dadurch gekennzeichnet, dass** die Spannköpfe (2, 3) Auflagen für das Förderband (8) bilden und dass den Spannköpfen Niederhalter (14) für das Förderband (8) zugeordnet sind.

7. Bandförderer und Vorrichtung nach einem der Ansprüche 1 bis 6, **dadurch gekennzeichnet, dass** der Spanntrieb (5) einen Seilzug (6) umfasst.

8. Bandförderer und Vorrichtung nach einem der Ansprüche 1 bis 7, **dadurch gekennzeichnet, dass** der Spanntrieb (5) mit einem Geber (16) für die Spannkraft ausgerüstet ist.

## Claims

1. Belt conveyor and device for maintaining same, comprising a conveyor belt (8) guided over deflection rollers, the belt links (9) of the belt being produced from synthetic material and comprising recesses (11) for the engagement of the driving teeth of the deflection rollers, wherein the device for maintaining the belt conveyor comprises two tensioning heads (2, 3) provided with a tensioning drive (5) and arranged at a mutual spaced disposition in the belt longitudinal direction, which tensioning heads can be connected to the conveyor belt (8) with tensile strength by drivers (10) engaging into the recesses (11) in the belt links (9) and are arranged together with the tensioning drive (5) thereof in a frame (1) which can be introduced between the strands of the conveyor belt (8).

2. Belt conveyor and device as claimed in claim 1, **characterised in that** the drivers (10) are mounted on the tensioning heads in a replaceable manner in the form of replaceable strips.

3. Belt conveyor and device as claimed in claim 1 or 2, **characterised in that** the drivers (10) protruding towards the recesses (11) are mounted so as to be able to be countersunk into the tensioning heads (2, 3).

4. Belt conveyor and device as claimed in any one of claims 1 to 3, **characterised in that** the drivers (10) consist of a friction material or comprise a friction lining.

5. Belt conveyor and device as claimed in any one of claims 1 to 4, **characterised in that** the drivers (10) comprise a latching profiling in the driving direction.

6. Belt conveyor and device as claimed in any one of claims 1 to 5, **characterised in that** the tensioning heads (2, 3) form supports for the conveyor belt (8), and **in that** holddown devices (14) for the conveyor belt (8) are allocated to the tensioning heads.

7. Belt conveyor and device as claimed in any one of claims 1 to 6, **characterised in that** the tensioning drive (5) includes a cable winch (6).

8. Belt conveyor and device as claimed in any one of claims 1 to 7, **characterised in that** the tensioning drive (5) is equipped with a sensor (16) for the tensioning force.

## Revendications

1. Convoyeur à bande et dispositif pour sa maintenance avec une bande de transport (8) guidée sur des poulies, dont les structures de bande (9) constituées en matière plastique présentent des évidements (11) qui permettent la mise en prise des dents d'entraînement des poulies de guidage, le dispositif de maintenance du convoyeur à bande comprenant deux têtes de serrage (2, 3) disposées à une distance mutuelle dans la direction longitudinale de la bande, munies d'un mécanisme de serrage (5) qui peuvent être reliées, de manière résistante, à la traction, avec la bande de transport (8) par des cames d'entraînement (10) venant en prise dans les évidements (11) des structures de bande (9) qui sont disposées ensemble avec leur mécanisme de serrage (5) dans un châssis (1) pouvant être inséré entre les brins de la bande de transport (8).

2. Convoyeur à bande et dispositif selon la revendication 1, **caractérisé en ce que** les cames d'entraînement (10) sont placées, de manière interchangeable, en forme de barres échangeables sur les têtes de serrage.

3. Convoyeur à bande et dispositif selon la revendication 1 ou 2, **caractérisé en ce que** les cames d'entraînement (10) faisant saillie contre les évidements (11) sont placées de manière escamotable dans les têtes de serrage (2, 3).

4. Convoyeur à bande et dispositif selon l'une des revendications 1 à 3, **caractérisé en ce que** les cames d'entraînement (10) sont en matériau de friction ou présentent une garniture de friction.

5. Convoyeur à bande et dispositif selon l'une des revendications 1 à 4, **caractérisé en ce que** les cames d'entraînement (10) présentent dans la direction d'entraînement un profilage d'encliquetage.

6. Convoyeur à bande et dispositif selon l'une des revendications 1 à 5, **caractérisé en ce que** les têtes de serrage (2, 3).forment des supports pour la bande de transport (8) et **en ce que** des dispositifs de maintien (14) pour la bande de transport (8) sont associés aux têtes de serrage (2, 3).

7. Convoyeur à bande et dispositif selon l'une des revendications 1 à 6, **caractérisé en ce que** le mécanisme de serrage (5) comprend un câble de traction (6).

8. Convoyeur à bande et dispositif selon l'une des revendications 1 à 6, **caractérisé en ce que** le mécanisme de serrage (5) est équipé d'un transmetteur (16) pour la force de serrage.
